# EUROPEAN PATENT SPECIFICATION

(11) **EP 1 688 366 B1**
(45) Date of publication and mention of the grant of the patent: **26.05.2010**
(21) Application number: 06075260.7
(22) Date of filing: 06.02.2006
(51) Int. Cl.: B65D 77/04, B65D 5/20

(54) **Device for enveloping and emptying a package, and assembly of such device and package**
Vorrichtung zur Umhüllung und Entleerung einer Verpackung, und Einheit aus einer solchen Vorrichtung und Verpackung
Dispositif d'emballage et de vidage d'un emballage et ensemble d'un tel dispositif et emballage.

(30) Priority: 08.02.2005 NL 1028217
(43) Date of publication of application: 09.08.2006
(73) Proprietor: Intercon Holland B.V., 5141 MT Waalwijk (NL)
(72) Inventor: Bochno, Victor Robert, 5553 BD Valkenswaard (NL); Boot, Ronald, 4703 AS Roosendaal (NL); Blom, Cornelis Willem, 2171 AA Sassenheim (NO)
(74) Representative: Winckels, Johannes Hubertus F.

(56) References cited:
- EP-A- 1 391 397
- NL-C2- 1 013 778
- NL-C2- 1 018 232

## Description

This invention relates to a device for enveloping and metered emptying of a package provided with at least one receiving space, surrounded by flexible material, with a dispense opening to be opened, surrounded by flexible material, as described, for instance, in applicant's older patent application EP-1 391 397.

With the assembly discussed there, the possibility of emptying the package completely in a handy manner has been realized, while at the same time efficiently enabling metered, stepwise emptying with interim storage. The at least one dispense opening is then effectively closed by clamping it between a stationary and a movable part after the partial emptying of the package. In this assembly, use is made of a device intended for frequent reuse, whereby a completely emptied package is each time replaced with a new, full package.

It is noted that Dutch patent publication NL 1 018 232 discloses a device for enveloping a package, wherein a cover and a box are hingedly connected on a side of the box in parallel with a longitudinal axis of the package.

The object of the invention is to provide a device which, in principle, is intended for single use, for instance for a consumer or small user only sporadically having use for the viscous material packaged in the assembly, or as a trial package before the reuse system is purchased.

This object can be realized according to the invention by a device according to claim 1. By making use of a device provided with a first enveloping part provided with a substantially flat supporting face for the package and a second enveloping part provided with a covering face, which is hingedly connected with the first enveloping part and, from a position of use in which the covering face is in the same plane as the supporting face, can be folded back to an enveloping position in which the package is included between the first and the second enveloping part, while the first and the second enveloping part are at least partly manufactured from a one-piece strip of a material which can be provided with a line hinge through a deforming operation, the first and the second enveloping part can be held in their enveloping position by means of connecting means, and the first enveloping part carries coupling means for the package. Through these measures, in a relatively simple and inexpensive manner, a device can be realized which, in the position of use, affords a relatively long surface for optimally and completely emptying the package, as well as the possibility of effectively mixing several viscous components pressed out of the package. In the enveloping position, the assembly can be optimally displayed and provided with information, while the package is put away whilst effectively protected. The package can be closed upon partial emptying by folding back the second enveloping part from the position of use to the enveloping position through a proper positioning of the part of the package in which the dispense opening is present, by combined folding. That after a number of times of folding back and forth, the package's being folded shut by folding it over will diminish in effectiveness is of lesser relevance in view of the disposable character of the assembly. On the other hand, in view of this character, it is of great advantage that the package, by virtue of the system used, can be emptied substantially completely with extreme meticulousness, which means both a possible use of all of the material purchased and a least possible environmental impact.

To fold back the second enveloping part relative to the first enveloping part to realize the enveloping position and to fold shut a partly emptied package, it can simply suffice to provide a single line hinge in the one-piece strip of material, whereby the covering face and/or the supporting face are to be bent to a slight convexity to be able to include between them the package still partly filled. However, in particular for somewhat thicker packages, it is preferred that the connection between the first and the second enveloping part comprises a hinge panel which is part of the one-piece material strip and is connected on one side via a line hinge with the first enveloping part and via a second line hinge with the second enveloping part. Such an embodiment also allows better for the fact that the material during emptying of the package is pressed in the direction of the dispense opening, so that at the dispense opening the full thickness of the package is present virtually all the time.

Also, this embodiment affords the possibility of obtaining a tauter box-shaped design and the first and second enveloping part can be made of relatively stiff and taut design, which is beneficial both to protective envelopment and the emptying and mixing process, which effect can be improved further still if the first and the second enveloping part are strengthened with a strengthening plate. It may then be elected that a first strengthening plate provided on the first enveloping part forms the supporting face and a second strengthening plate provided on the second enveloping part forms the covering face. This embodiment is preferred in particular if the supporting face and/or the covering face are to be manufactured from a material in which a line hinge cannot be provided through deforming. Also, this embodiment affords possibilities if specific requirements are to be imposed on the supporting face in connection with pressing the viscous material contained in the package out of the package, or on the covering face in connection with the mixing of components pressed out of different compartments of the package.

If specific requirements are imposed on the exterior of the package, it may be elected that a first strengthening plate is provided on the side of the first enveloping part facing away from the supporting face, and a second strengthening plate on the side of the second enveloping part facing away from the covering face. This embodiment can also be preferred when contemplating maximal alignment of the supporting face with respect to the covering face. Such alignment can also be achieved, incidentally, if on the hinge panel a strengthening panel is provided, in which case the first and the second strengthening plate as well as the hinge strip preferably have the same thickness. This, in turn, can be realized in a simple manner if the first and the second strengthening plate as well as the hinge strip are manufactured from a one-piece continuous strip of a material which can be provided with a line hinge through a deforming operation, while a still further simplification can be realized if first and second enveloping part, hinge panel, strengthening panel and first and second strengthening plate are manufactured from a one-piece strip.

For the package to be emptied efficiently, it should be non-slidably retained with respect to the supporting face. This can evidently be realized by gluing the package, at least stripwise, onto the supporting face or by hooking lugs and holes. In the case of more than one component, it is preferred that mutually tuned amounts of components be expelled from the package. This can be realized by providing compartment spaces remaining equal in cross section and then emptying these along a line perpendicular thereto. To that end, it is known to provide guide edges on opposite sides of the supporting face and a cooperating expulsion element or spatula. In such a case, retention of the package on the supporting face can be realized in an advantageous manner if the supporting face is at least partly bounded by guide edges in the form of hollow tubes, into which, from one end, with a sliding fit, lugs are slidable which are connected with a coupling rib extending between the lugs, to which the package can be attached. These hollows tubes can be formed in a simple manner by providing line hinges in the material of the device, which is suitable therefor and already present.

The invention further relates to an assembly of a device as discussed in the foregoing, and a package provided with at least one receiving space, surrounded by flexible material, with a dispense opening to be opened, surrounded by flexible material, the package being secured to the device by means of coupling means, in such a way that in the enveloping position the part of the package in which the at least one dispense opening is present, together with the second enveloping part, has been folded over and back, with which in a relatively simple and inexpensive manner an effectively executable phased emptying of a package and mixing of the expelled components can be realized with a disposable assembly.

To further facilitate the operations connected with emptying the package and processing the expelled material, that is, without making use of auxiliary materials and tools, it may be provided that in the enveloping position, next to the package, there is an expulsion element, such as a spatula, between the first and the second enveloping part. It is then further preferred that the supporting face is at least partly bounded by upstanding guide edges and the expulsion element or the spatula is provided with a design that optimizes cooperation with the upstanding guide edges.

Certainly when the package has been opened and needs to be stored temporarily, measures need to have been taken to keep the device in its enveloping position. This is possible in a variety of ways. In view of the disposable character of the assembly, a solution which, while not durable upon frequent use, is simple and inexpensive can be realized if the supporting face is at least partly bounded by upstanding guide edges in which cuts have been provided in which lips connected with the second enveloping part can be inserted for keeping in the enveloping position the second enveloping part partly enveloping and covering the package in that position.

The device, and the assembly to be formed therewith, according to the invention will presently be further elucidated on the basis of examples represented in the drawings, though exclusively as non-limiting embodiments. In the drawings:
Fig. 1 shows in perspective an assembly with an opened device and a package placed therein;
Fig. 2 shows in cross section a part of the assembly according to Fig. 1 in the enveloping position;
Fig. 3 shows a cross section corresponding to that according to Fig. 2, with a second embodiment of the device;
Fig. 4 shows in cross section a part of an assembly with a third embodiment of the device;
Fig. 5 shows in cross section a fourth embodiment of the device; and
Fig. 6 shows in cross section an expulsion element cooperating with the device according to Fig. 1, in the form of a spatula.

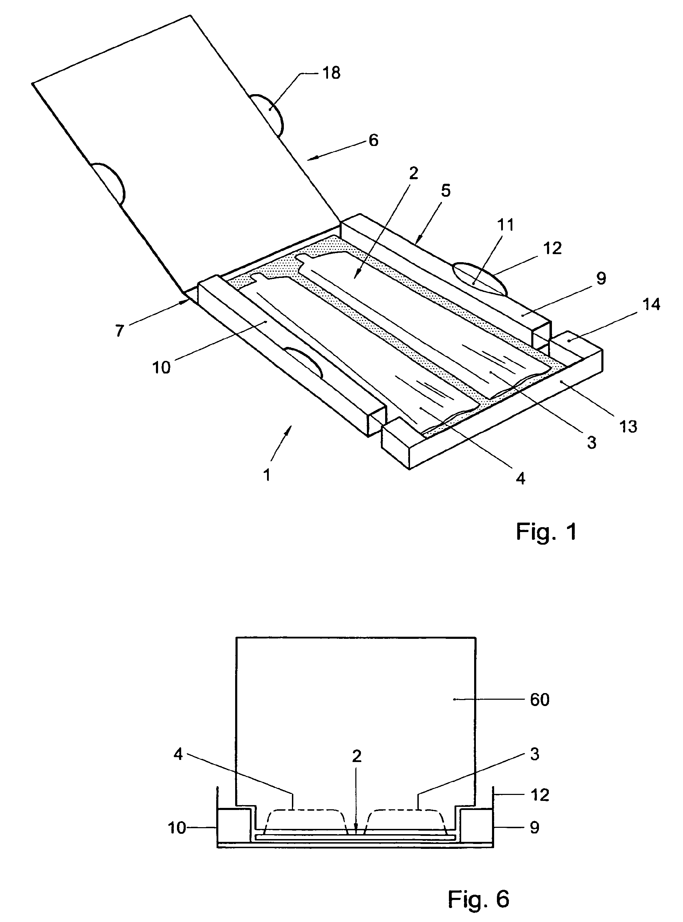

The assembly represented in Fig. 1 comprises a device 1 and a package 2. The device 1 is manufactured from a one-piece blank of a material in which a line hinge can be provided by deforming. For such an application, cardboard is an eminently suitable material, although any other suitable material can be used, for instance plastics can be considered. It is noted that for the purpose of elucidating the various aspects of the assembly, the thickness of the material is represented disproportionately large in the drawings.

The package 2 is manufactured from two plastic film sheets, which have been sealed together stripwise so as to form two elongate compartments 3 and 4 which are filled with a viscous material. The elongate compartments 3 and 4 have the same cross section throughout the most part of their length, but at the same end both narrow in the form of a spout. The package 2, that is, the compartments, can be opened by cutting away a strip of material, such that the spout-shaped narrowing parts of the compartments 3 and 4 form dispense openings.

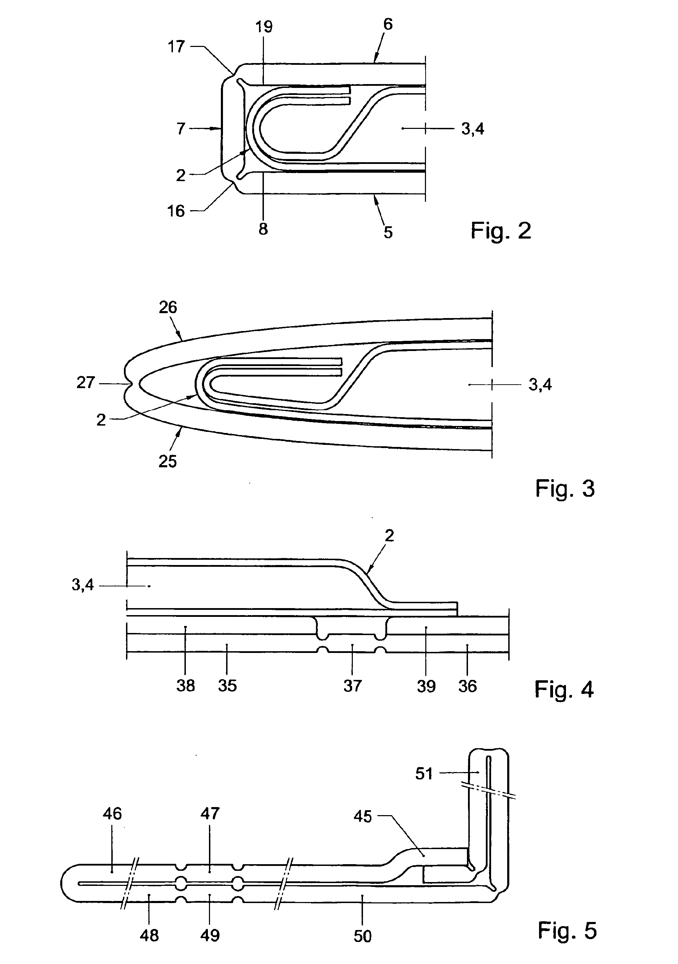

The device 1 comprises a first enveloping part 5, a second enveloping part 6 and, situated between these, a hinge panel 7. The first enveloping part 5 is provided with a supporting face 8 (Fig. 2), which is bounded on opposite sides by hollow tubes 9 and 10 and, between these, carries the package 2. The tubes 9 and 10 have been formed by providing line hinges in the blank by deforming, for instance scoring, and thereupon flanging and gluing together. In each of the tubes, an arcuate cut is provided, so that upon flanging into the tubular form, an opening 11 is formed in the tube next to a vertical lip 12. By its end remote from the spout-shaped narrowed parts of the compartments, the package 2 has been secured, for instance by gluing, to an end wall part 13 which, at its respective ends, is provided with lugs 14 which can be inserted into the hollow tubes to thereby arrest the package 2, whilst lying on the supporting face 8, relative to the enveloping part 5. The arrangement is then so dimensioned that the narrowed parts of the compartments 3 and 4, when the lugs 14 have been inserted completely, are situated adjacent the beginning of the second enveloping part 6.

On the side remote from the end wall part 13, the first enveloping part 5 is connected, in one piece, via a line hinge 16 obtained by deforming, with the hinge panel 7, which in turn is connected via a line hinge 17 with the second enveloping part 6, which has a width equal to that of the first enveloping part 5 and a length such that at least the first enveloping part 5, upon folding back of the second enveloping part 6, can be completely covered by it. If desired, the second enveloping part 6 can be made of somewhat longer design, to thereby realize a possibility of suspension from, for instance, a display stand. Further, along each of its side edges, the second enveloping part 6 is provided with a lip 18, which lips are situated such that, when the second enveloping part 6 is folded back, they can be inserted into the openings 11, thereby allowing the assembly to be locked in its enveloping position.

In Fig. 2 it is shown how in the enveloping position, when a package 2 has been opened, the dispense openings are closed by folding back, together with the second enveloping part 6, the part of the package in which the dispense openings are present. It will be clear that to that end the dimensioning of the arrangement should be chosen such that the dispensing part of an opened package, in the opened position of use of the assembly, must project (viewed from the supporting face 8) beyond the hinge panel 7 onto covering face 19.

In Fig. 3, with respect to Fig. 1 and Fig. 2, a modified embodiment of the device is represented. In this modified embodiment, a first enveloping part 25 and a second enveloping part 26 are mutually connected directly via a single hinge line 27. In the enveloping position, the first and second enveloping part are slightly bent towards each other adjacent the line hinge, which promotes closure of the open package, but reduces the stable box shape of the package.

In Fig. 4, the assembly is represented in the position of use, employing a device again modified with respect to Fig. 1. In the modified device, on both the first enveloping part 35 and the second enveloping part 36, a strengthening plate 38 and 39, respectively, is arranged, while such a plate is absent at the hinge panel 37. This causes a slight local depression in the surface supporting the package 2, but in view of the disposable character of the assembly and the associated slight material thicknesses of the constituent parts of the device, this is hardly, if at all, of influence on the process of emptying the package. Instead of or in addition to a strengthening or stiffening function, the strengthening plates referred to can also be arranged for another purpose, for instance to create improved conditions on the covering face for mixing two components pressed out of a package.

In Fig. 5, a device is shown of overall double design, again manufactured from a single blank. A first enveloping part 45 forming the supporting face is connected, by way of a line hinge pressed into the blank, with a hinge panel 47 which is coupled via a line hinge with a second enveloping part 46 which, at its end opposite the line hinge, has been bent over through 180° and thus forms a strengthening plate 48. Via a line hinge, this strengthening plate 48 is connected with a strengthening hinge panel 49, which is connected via a line hinge with a further strengthening plate 50. This further strengthening plate 50 has been bent over at its end through 90° so as to form an end wall 51 which, by folding back, is of double design and after a further bend terminates between the first enveloping part 45 and the strengthening plate 50. In this area, a package can be secured to the device, for instance by gluing or stapling.

In Fig. 6, the first enveloping part 5 is represented in cross section for further elucidating the emptying phase of the package 2. Emptying is done here using a spatula 60, which has a width greater than the perpendicular distance between the hollow tubes 9 and 10 and in two corner areas is provided with rectangular recesses, at least recesses whose profile is tailored to the mutually facing sides of the hollow tubes 9 and 10. In the direction of their height, the recesses are so dimensioned as to abut the top of the hollow tubes 9 and 10 if there is a completely emptied package 2 under the spatula 60, as indicated in Fig. 6, with the as yet unemptied package 2 extending beyond the spatula 60 in the direction of spout-shaped discharge openings. The height of the spatula 60 has been chosen such that it can be conveniently gripped and manipulated by hand.

It will be clear that within the framework of the invention as laid down in the appended claims, many other modifications and variants are possible. Thus, the hinge panel 7, whether of double design or not, can be formed by a series of immediately adjacent, mutually parallel line hinges. Further, in the embodiment according to Fig. 3, the second enveloping part 26 can be designed in the form of an open box, having in the enveloping position an inclined surface extending from the line hinge 27, with lateral vertical wall parts abutting a flat and straight first enveloping part 25. Such a profiled second enveloping part 26 can for instance be made of transparent plastic. The spatula can also be designed in many other ways. Thus, it can be manufactured from plastic and provided with a beveled pressure edge on one side and a grip on the other side.

## Claims

1. A device (1) for enveloping and metered emptying of a package (2) provided with at least one receiving space, surrounded by flexible material, with a dispense opening to be opened, surrounded by flexible material, which device is provided with a first enveloping part (5; 25) provided with a substantially flat supporting face (8) for the package, an end wall part (13) placed by the end remote from the dispense opening of said package, and a second enveloping part (6; 26) provided with a covering face (19), and, from a position of use in which the covering face is in the same plane as the supporting face, can be folded back to an enveloping position in which the package is included between the first and the second enveloping part, while the first and the second enveloping part are at least partly manufactured from a one-piece strip of a material which can be provided with a line hinge (16) by a deforming operation, the first and the second enveloping part can be held in their enveloping position by means of connecting means, and the first enveloping part carries coupling means for the package,
**characterized in that** the second enveloping part is hingedly connected with the first enveloping part on the side remote from said end wall part.

2. A device according to claim 1, wherein the connection between the first and second enveloping part consists of a single line hinge in the one-piece material strip.

3. A device according to claim 1, wherein the connection between the first and the second enveloping part comprises a hinge panel (7) which is part of the one-piece material strip and further on one side is connected via a line hinge (16) with the first enveloping part and via a second line hinge (17) with the second enveloping part.

4. A device according to claim 3, wherein the first and the second enveloping part are strengthened with a strengthening plate (38; 39).

5. A device according to claim 4, wherein a first strengthening plate provided on the first enveloping part forms the supporting face and a second strengthening plate provided on the second enveloping part forms the covering face.

6. A device according to claim 4, wherein a first strengthening plate is provided on the side of the first enveloping part facing away from the supporting face, and a second strengthening plate is provided on the side of the second enveloping part facing away from the covering face.

7. A device according to claim 5 or 6, wherein a strengthening panel is provided on the hinge panel.

8. A device according to claim 7, wherein the first and the second strengthening plate as well as the hinge strip have the same thickness.

9. A device according to claim 8, wherein the first and the second strengthening plate as well as the hinge strip are manufactured from a one-piece continuous strip of a material which can be provided with a line hinge by a deforming operation.

10. A device according to claim 9, wherein first and second enveloping part, hinge panel, strengthening panel and first and second strengthening plate are manufactured from a one-piece strip.

11. A device according to any one of the preceding claims, wherein the supporting face is at least partly bounded by guide edges in the form of hollow tubes (9, 10), into which, from one end, with a sliding fit, lugs (14) are slidable which are connected with a coupling rib extending between the lugs, to which the package can be attached.

12. An assembly of a device according to any one of the preceding claims and a package provided with at least one receiving space, surrounded by flexible material, with a dispense opening to be opened, surrounded by flexible material, the package being secured to the device by means of coupling means, such that in the enveloping position the part of the package in which the at least one dispense opening is present, together with the second enveloping part, has been folded over and back.

13. An assembly according to claim 12, wherein in the enveloping position, next to the package, there is further an expulsion element, such as a spatula, between the first and the second enveloping part.

14. An assembly according to claim 13, wherein the supporting face is at least partly bounded by upstanding guide edges and the expulsion element is provided with a design optimizing cooperation with the upstanding guide edges.

15. An assembly according to claim 12, wherein the supporting face is at least partly bounded by upstanding guide edges in which cuts are provided in which lips connected with the second enveloping part can be inserted to keep in the enveloping position the second enveloping part partly enveloping and covering the package in that position.

## Patentansprüche

1. Vorrichtung (1) zum Umhüllen und dosierten Entleeren einer Verpackung (2), die mit mindestens einem von einem flexiblen Material umschlossenen Aufnahmeraum und einer von einem flexiblen Material umschlossenen, zu öffnenden Ausgabeöffnung versehen ist, wobei die Vorrichtung mit einem ersten Umhüllungsabschnitt (5; 25) mit einer im Wesentlichen flachen Auflagefläche (8) für die Verpackung, einem an dem von der Ausgabeöffnung der Verpackung entfernten Ende angeordneten Endwandabschnitt (19) und einem zweiten Umhüllungsabschnitt (6; 26) mit einer Abdeckfläche (19) versehen ist und von einer Benutzungsposition, in der sich die Abdeckfläche in der gleichen Ebene wie die Auflagefläche befindet, in eine Umhüllungsposition zurückgeklappt werden kann, in der die Verpackung zwischen dem ersten und dem zweiten Umhüllungsabschnitt eingeschlossen ist, wobei der erste und der zweite Umhüllungsabschnitt zumindest abschnittweise aus einem einteiligen Materialstreifen hergestellt sind, der durch einen Verformungsvorgang mit einer Scharnierlinie (16) versehen werden kann, wobei der erste und der zweite Umhüllungsabschnitt durch Verbindungsmittel in der Umhüllungsposition gehalten werden können und wobei der erste Umhüllungsabschnitt Verbindungsmittel für die Verpackung aufweist, **dadurch gekennzeichnet, dass** der zweite Umhüllungsabschnitt an der von dem Endwandabschnitt entfernten Seite in der Art eines Scharniers mit dem ersten Umhüllungsabschnitt verbunden ist.

2. Vorrichtung nach Anspruch 1, wobei die Verbindung zwischen dem ersten und dem zweiten Umhüllungsabschnitt aus einer einzigen Scharnierlinie in dem einteiligen Materialstreifen besteht.

3. Vorrichtung nach Anspruch 1, wobei die Verbindung zwischen dem ersten und dem zweiten Umhüllungsabschnitt ein Scharnierblatt (7) umfasst, das Teil eines einteiligen Materialstreifens ist und das ferner auf einer Seite über eine Scharnierlinie (16) mit dem ersten Umhüllungsabschnitt und über eine zweite Scharnierlinie (17) mit dem zweiten Umhüllungsabschnitt verbunden ist.

4. Vorrichtung nach Anspruch 3, wobei der erste und der zweite Umhüllungsabschnitt durch eine Verstärkungsplatte (38, 39) verstärkt sind.

5. Vorrichtung nach Anspruch 4, wobei eine an dem ersten Umhüllungsabschnitt vorgesehene erste Verstärkungsplatte die Auflagefläche und eine an dem zweiten Umhüllungsabschnitt vorgesehene zweite Verstärkungsplatte die Abdeckfläche bildet.

6. Vorrichtung nach Anspruch 4, wobei eine erste Verstärkungsplatte an der von der Auflageseite weggerichteten Seite des ersten UmhüNungsabschnitts und eine zweite Verstärkungsplatte an der von der Abdeckfläche weggerichteten Seite des zweiten Umhüllungsabschnitts angeordnet sind.

7. Vorrichtung nach Anspruch 5 oder 6, wobei an der Scharnierplatte ein Verstärkungsblatt vorgesehen ist.

8. Vorrichtung nach Anspruch 7, wobei die erste und die zweite Verstärkungsplatte sowie der Scharnierstreifen die gleiche Dicke haben.

9. Vorrichtung nach Anspruch 8, wobei die erste und die zweite Verstärkungsplatte sowie der Scharnierstreifen aus einem einteiligen durchgehenden Materialstreifen hergestellt sind, der durch einen Verformungsvorgang mit einer Scharnierlinie versehen werden kann.

10. Vorrichtung nach Anspruch 9, wobei der erste und der zweite Umhüllungsabschnitt, das Scharnierblatt, das Verstärkungsblatt und die erste und die zweite Verstärkungsplatte aus einem einteiligen Streifen hergestellt sind.

11. Vorrichtung nach einem der vorhergehenden Ansprüche, wobei die Auflagefläche zumindest teilweise durch Führungskanten in der Form von Hohlrohren (9, 10) begrenzt ist, in die von einem Ende unter Gleitpassung Ansätze (14) eingeschoben werden können, die mit einer sich zwischen den Ansätzen erstreckenden Verbindungsleiste verbunden sind, an der die Verpackung befestigt werden kann.

12. Einheit aus einer Vorrichtung gemäß einem der vorhergehenden Ansprüche und einer Verpackung die mit mindestens einem von einem flexiblen Material umschlossenen Aufnahmeraum und einer von einem flexiblen Material umschlossenen, zu öffnenden Ausgabeöffnung versehen ist, wobei die Verpackung mit Hilfe eines Verbindungsmittels an der Vorrichtung befestigt ist, so dass in der Umhüllungsposition der Abschnitt der Verpackung, in der die zumindest eine Ausgabeöffnung vorhanden ist, zusammen mit dem zweiten Umhüllungsabschnitt um- und zurückgeklappt wird.

13. Einheit nach Anspruch 12, wobei sich in der Umhüllungsposition neben der Verpackung ferner ein Ausstoßelement wie beispielsweise ein Spatel zwischen dem ersten und dem zweiten Umhüllungsabschnitt befindet.

14. Einheit nach Anspruch 13, wobei die Auflagefläche zumindest teilweise durch hochstehende Führungskanten begrenzt ist und das Ausstoßelement derart gestaltet ist, dass das Zusammenwirken mit den hochstehenden Führungskanten optimiert wird.

15. Einheit nach Anspruch 12, wobei die Auflagefläche zumindest teilweise durch hochstehende Führungskanten begrenzt ist, in denen Einschnitte vorgesehen sind, in die mit dem zweiten Umhüllungsabschnitt verbundene Fahnen eingesetzt werden können, um den zweiten Umhüllungsabschnitt in der Umhüllungsposition derart zu halten, dass er die Verpackung in dieser Position teilweise umhüllt und verdeckt.

## Revendications

1. Dispositif (1) pour envelopper et vider de manière mesurée un emballage (2) muni d'au moins un espace de réception, entouré par du matériau flexible, avec une ouverture de distribution pour être ouverte, entourée par du matériau flexible, ledit dispositif étant muni d'une première partie d'enveloppement (5 ; 25) munie d'une face de support (8) sensiblement plate pour l'emballage, une partie formant paroi d'extrémité (13), placée à l'extrémité distante de l'ouverture de distribution dudit emballage, et d'une deuxième partie d'enveloppement (6 ; 26) munie d'une face de recouvrement (19) et, depuis une position d'utilisation dans laquelle la face de recouvrement se trouve dans le même plan que la face de support, pouvant être repliée en une position d'enveloppement, dans laquelle l'emballage est inclus entre la première et la deuxième partie d'enveloppement, la première et la deuxième partie d'enveloppement sont fabriquées, au moins partiellement, à partir d'une bande de matériau réalisée en une seule pièce, pouvant être munie d'une charnière de ligne (16) par une opération de déformation, la première et la deuxième partie d'enveloppement pouvant être maintenues en leur position d'enveloppement à l'aide de moyens de liaison, et la première partie d'enveloppement porte des moyens d'accouplement pour l'emballlage,
**caractérisé en ce que** la seconde partie d'enveloppement est liée de façon pivotante à la première partie d'enveloppement sur le côté éloigné de la dite partie formant paroi d'extrémité.

2. Dispositif selon la revendication 1, dans lequel la liaison entre la première et la deuxième partie d'enveloppement est composée d'une unique charnière de ligne, dans la bande de matériau réalisée en une seule pièce.

3. Dispositif selon la revendication 1, dans lequel la liaison entre la première et la deuxième partie d'enveloppement comprend un panneau de charnière (7), faisant partie de la bande de matériau réalisée en une seule pièce et, en outre, est relié sur un côté, à la première partie d'enveloppement, via une charnière à lignes (16), et à la deuxième partie d'enveloppement, via une deuxième charnière à lignes (17).

4. Dispositif selon la revendication 3, dans lequel la première et la deuxième partie d'enveloppement sont renforcées à l'aide d'une plaque de renforcement (38 ; 39).

5. Dispositif selon la revendication 4, dans lequel une première plaque de renforcement, prévue sur la première partie d'enveloppement, forme la face de support et une deuxième plaque de renforcement, prévue sur la deuxième partie d'enveloppement, forme la face de recouvrement.

6. Dispositif selon la revendication 4, dans lequel une première plaque de renforcement est prévue sur le côté de la première partie d'enveloppement tourné à l'opposé de la face de support, et une deuxième plaque de renforcement est prévue sur le côté de la deuxième partie d'enveloppement tourné à l'opposé de la face de recouvrement.

7. Dispositif selon la revendication 5 ou 6, dans lequel un panneau de renforcement est prévu sur le panneau de charnière.

8. Dispositif selon la revendication 7, dans lequel la première et la deuxième plaque de renforcement, ainsi que la bande formant charnière, ont la même épaisseur.

9. Dispositif selon la revendication 8, dans lequel la première et la deuxième plaque de renforcement, ainsi que la bande formant charnière, sont fabriquées à partir d'une bande de matériau continue, réalisée en une seule pièce, pouvant être munie d'une charnière à lignes par une opération de déformation.

10. Dispositif selon la revendication 9, dans lequel la première et la deuxième partie d'enveloppement, la charnière à lignes, le panneau de renforcement et la première et la deuxième plaque de renforcement sont fabriqués à partir d'une bande réalisée en une seule pièce.

11. Dispositif selon l'une quelconque des revendications précédentes, dans lequel la face de support est délimitée au moins partiellement par des bords de guidage ayant la forme de tubes (9, 10) creux, dans lesquels, d'une extrémité, avec un montage coulissant, sont susceptibles de coulisser des oreilles (14), reliées à une nervure d'accouplement s'étendant entre les oreilles, à laquelle l'emballage peut être attaché.

12. Ensemble d'un dispositif selon l'une quelconque des revendications précédentes et d'un emballage muni d'au moins un espace de réception, entouré par du matériau flexible, avec une ouverture de distribution pour être ouverte, entourée par du matériau flexible, l'emballage étant fixé au dispositif à l'aide de moyens d'accouplement, de manière que, dans la position d'enveloppement, la partie de l'emballage dans laquelle la au moins une ouverture de distribution est présente, conjointement avec la deuxième partie d'enveloppement, a été pliée en recouvrement et en rétraction.

13. Ensemble selon la revendication 12, dans lequel, dans la position d'enveloppement, à la suite de l'emballage, est en outre prévu un élément d'expulsion, tel qu'une spatule, entre la première et la deuxième partie d'enveloppement.

14. Ensemble selon la revendication 13, dans lequel la face de support est au moins partiellement délimitée par des bords de guidage montants et l'élément d'expulsion est doté d'une conception optimisant la coopération avec les bords de guidages montants.

15. Ensemble selon la revendication 12, dans lequel la face de support est au moins partiellement délimitée par des bords de guidage montants, dans lesquels sont prévues des découpures, dans lesquelles des lèvres, reliées à la deuxième partie d'enveloppement, peuvent être insérées pour maintenir dans la position d'enveloppement, la deuxième partie d'enveloppement enveloppant et couvrant partiellement l'emballage dans cette position.
